# EUROPEAN PATENT APPLICATION

(11) **EP 4 834 690 A1**
(43) Date of publication of application: **04.11.2026**
(21) Application number: 26159732.2
(22) Date of filing: 20.02.2026
(51) Int. Cl.: B60W 50/14, B60W 50/00, B60W 50/08, B60W 50/16

(54) **VEHICLE AND METHOD FOR CONTROLLING SAME**

(30) Priority: 28.04.2025 KR 20250055426
(71) Applicant: Hyundai Motor Company, Seoul 06797 (KR); Kia Corporation, Seoul 06797 (KR)
(72) Inventor: Lee, Sang Hyu, 18280 Gyeonggi-do (KR); Lee, Byoung Joon, 18280 Gyeonggi-do (KR); Kim, Su Hyun, 18280 Gyeonggi-do (KR); Kim, Jong Chul, 18280 Gyeonggi-do (KR); Choi, Eun Young, 18280 Gyeonggi-do (KR)
(74) Representative: Hoffmann Eitle

(57) **Abstract**

A vehicle and a method for controlling the same are disclosed. An autonomous vehicle control device may identify first information related to an attention state of a driver associated with an autonomous vehicle; identify second information related to a surrounding road environment of the autonomous vehicle; during autonomous driving control of the autonomous vehicle, determine, based on the first information and the second information, a reference value for setting a warning output condition; and control, based on the determined reference value, a warning output of the autonomous vehicle.

## Description

### CROSS-REFERENCE TO RELATED APPLICATION

This application claims priority to and the benefit of Korean Patent Application No. 10-2025-0055426, filed April 28, 2025 in the Korean Intellectual Property Office, the disclosure of which is incorporated herein by reference in its entirety.

### FIELD OF TECHNOLOGY

The present disclosure relates to an autonomous vehicle and a method of controlling the autonomous vehicle.

### BACKGROUND

While some implementations of driver attention warning systems are capable of providing warning messages when the driver's attention level deteriorates, the level of detail that they capture and analyze the driver's condition may be low, and they may always provide the same warning according to a certain criterion.

Outputting uniform warning messages without considering the fatigue and distraction level of the driver may result in the reduced effectiveness of the warning messages because the driver may adapt and become inured to those warnings.

The matters described in this Background section are only for enhancement of understanding of the background of the disclosure, and should not be taken as acknowledgement that they correspond to prior art already known to those skilled in the art.

### SUMMARY

The technical problem to be achieved by the present disclosure is to solve the above-described problem, and an object of the present disclosure is that a driver's attention state and a road environment are analyzed in real time, and a reference value for setting a warning output condition is calculated based on the analysis to provide a customized warning to the driver.

The problems to be solved by the present disclosure are not limited to the problems mentioned above, and other problems not mentioned will be clearly understood by a person skilled in the art from the following description.

According to one or more example embodiments of the present disclosure, an autonomous vehicle control device may include a processor and a memory. The memory may store at least one instruction that is configured, when executed by the processor, to cause the autonomous vehicle control device to: identify first information related to an attention state of a driver associated with an autonomous vehicle; identify second information related to a surrounding road environment of the autonomous vehicle; during autonomous driving control of the autonomous vehicle, determine, based on the first information and the second information, a reference value for setting a warning output condition; and control, based on the determined reference value, a warning output of the autonomous vehicle.

The first information may include at least one of: a gaze direction of the driver, an eye blink of the driver, a head direction change of the driver, or a response time of the driver to an in-vehicle warning signal.

The first information may include a result learned based on historical attention state data of the driver. The at least one instruction may be configured, when executed by the processor, to cause the autonomous vehicle control device to determine the reference value by: determining, based on comparing the learned result with the first information, the reference value.

The at least one instruction may be configured, when executed by the processor, to cause the autonomous vehicle control device to determine the reference value by: identifying third information related to biometric information of the driver; and determining the reference value further based on the third information.

The at least one instruction may be configured, when executed by the processor, to cause the autonomous vehicle control device to determine the reference value by: determining the reference value based on at least some information that is selected, from the first information and the second information, based on a change in a driving habit of the driver or the surrounding road environment.

The at least one instruction may be configured, when executed by the processor, to further cause the autonomous vehicle control device to adjust the reference value in real time.

The at least one instruction may be configured, when executed by the processor, to cause the autonomous vehicle control device to control the warning output of the autonomous vehicle by: outputting a first warning including at least one of: a visual warning, an auditory warning, or a tactile warning; receiving a response of the driver to the first warning; and outputting, based on the response of the driver, a second warning of a different type or a different combination of types from the first warning.

The surrounding road environment may include at least one of: a type of a roadway on which the autonomous vehicle is driving; traffic around the autonomous vehicle; or a weather condition of an area in which the autonomous vehicle is driving.

The at least one instruction is configured, when executed by the processor, to cause the autonomous vehicle control device to control the warning output of the autonomous vehicle by: adjusting, based on the reference value, at least one of a type, a period, a pattern, or an intensity of the warning output of the autonomous vehicle.

The at least one instruction may be configured, when executed by the processor, to cause the autonomous vehicle control device to control the warning output of the autonomous vehicle by: outputting, via an input and output interface of the autonomous vehicle, information related to a control state of the warning output.

According to one or more example embodiments of the present disclosure, a method performed by an apparatus of an autonomous vehicle may include: identifying first information related to an attention state of a driver associated with the autonomous vehicle; identifying second information related to a surrounding road environment of the autonomous vehicle; during autonomous driving control of the autonomous vehicle, determining, based on the first information and the second information, a reference value for setting a warning output condition; and controlling, based on the determined reference value, a warning output of the autonomous vehicle.

The first information may include at least one of: a gaze direction of the driver, an eye blink of the driver, a head direction change of the driver, or a response time of the driver to an in-vehicle warning signal.

The first information may include a result learned based on historical attention state data of the driver. Determining the reference value may include: determining, based on comparing the learned result with the first information, the reference value.

Determining the reference value may include: identifying third information related to biometric information of the driver; and determining the reference value based on the third information.

Determining the reference value may include: determining the reference value based on at least some information that is selected, from the first information and the second information, based on a change in a driving habit of the driver or the surrounding road environment.

Controlling the warning output of the autonomous vehicle may include: outputting a first warning including at least one of: a visual warning, an auditory warning, or a tactile warning; receiving a response of the driver to the first warning; and outputting, based on the response of the driver, a second warning of a different type or a different combination of types from the first warning.

The surrounding road environment may include at least one of: a type of a roadway on which the autonomous vehicle is driving; traffic around the autonomous vehicle; or a weather condition of an area in which the autonomous vehicle is driving.

Controlling the warning output of the autonomous vehicle may include: adjusting, based on the reference value, at least one of a type, a period, a pattern, or an intensity of the warning output of the autonomous vehicle.

Controlling the warning output of the autonomous vehicle may include: outputting, via an input and output interface of the autonomous vehicle, information related to a control state of the warning output.

According to one or more example embodiments of the present disclosure, an autonomous vehicle may include: a sensor configured to detect an attention state of a driver of the autonomous vehicle; a processor; and a memory. The memory may store at least one instruction that is configured, when executed by the processor, to cause the autonomous vehicle to: identify, via the sensor at a first time, a first attention state of the driver; during autonomous driving control of the autonomous vehicle, output, based on the first attention state, a first warning signal via a user interface of the autonomous vehicle; determine a response time, to the first warning signal, of the driver; identify, via the sensor at a second time later than the first time, a second attention state of the driver; and, during autonomous driving control of the autonomous vehicle, output, based on the second attention state and based on the response time being greater than a threshold time amount, a second warning signal via the user interface of the autonomous vehicle. The first warning signal may be of a first warning signal type, and the second warning signal may be of a second warning signal type different from the first warning signal type.

### BRIEF DESCRIPTION OF THE DRAWINGS

The above and other objects, features and advantages of the present disclosure will become more apparent to those of ordinary skill in the art by describing one or more example embodiments thereof in detail with reference to the accompanying drawings.
FIG. 1 is a schematic diagram of example components of an autonomous vehicle.
FIG. 2 is a flow chart of an example method of inducing driver attention.
FIG. 3 is a flowchart of an example method of learning an attention state of a driver and deriving scoring.
FIG. 4 is a flowchart of an example method of outputting a warning based on a risk score and adjusting the warning according to a driver's response.

### DETAILED DESCRIPTION

Hereinafter, one or more example embodiments of the present disclosure will be described in detail with reference to the accompanying drawings.

However, the technical idea of the present disclosure is not limited to the example embodiment(s) to be described, but may be implemented in various different forms, and within the scope of the technical idea of the present disclosure, one or more of the constituent elements may be selectively combined and substituted between different example embodiments.

In addition, the terms (e.g., including technical and scientific terms) used in the example embodiment(s) of the present disclosure may be interpreted as having a meaning that can be generally understood by those of ordinary skill in the art to which the present disclosure pertains, unless explicitly defined and described otherwise, and commonly used terms such as predefined terms may be interpreted in consideration of the contextual meaning of the related art.

In addition, the terms used in the example embodiment(s) of the present disclosure are for describing the example embodiment(s) and are not intended to limit the present disclosure.

In this specification, the singular form may include the plural form unless specifically stated otherwise in the phrase, and when described as "at least one (or one or more) of A and (or) B, and (or) C", it may include one or more of all possible combinations of A, B, and C. For purposes of the present application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

In addition, in describing the constituent elements of the example embodiment(s) of the present disclosure, terms such as first, second, A, B, (a), (b), etc. may be used.

These terms are only for distinguishing the constituent element from other constituent elements, and the essence, order, or sequence of the constituent element is not limited by the term.

And, when a constituent element is described as being 'connected', 'coupled', or 'joined' to another constituent element, it may include not only the case where the constituent element is directly connected, coupled, or joined to the other constituent element, but also the case where it is 'connected', 'coupled', or 'joined' through another constituent element between the constituent element and the other constituent element.

In addition, when it is described as being formed or disposed "on (top of) or under (below)" each constituent element, on (top of) or under (below) includes not only the case where the two constituent elements are in direct contact with each other, but also the case where one or more other constituent elements are formed or disposed between the two constituent elements. In addition, when expressed as "on (top of) or under (below)", it may include the meaning of not only the upward direction but also the downward direction based on one constituent element.

In the various flowcharts of this document, at least some of the steps may be omitted or the mutual order may be changed, and at least some of the various example embodiments of this document may be performed at a specific point in time of each step of the flowchart. The operations of the various flowcharts in this document may be performed by at least one of the control device 100, the processor 130, and the autonomous vehicle 10. In addition, redundant contents in the drawings of this document may be omitted. In this document, 'control device 100' may also be referred to as 'autonomous vehicle control device 100'.

In this document, the 'driver control assistance system' refers to hardware and software that can assist the driver in continuously controlling the longitudinal and lateral movements of the vehicle. This driver control assistance system may be referred to as an 'autonomous driving system' or 'system' in this document.

In this document, "feature" may mean a specific system function that provides assistance to the driver in a defined traffic scenario, situation, and system boundary.

In this document, "dynamic control' may mean performing the operational and tactical functions necessary to move the vehicle in real time. This may include control of the lateral and longitudinal movements of the vehicle, monitoring of the road environment, responding to events in the road traffic environment, planning operations, and signaling.

In this document, "system boundaries" may mean verifiable or measurable limits or conditions set by the manufacturer, up to or within the scope of the conditions that affect the system or the function of the system designed to provide assistance to the driver and the ability of the system to operate as intended.

In this document, the "risk score" is a value set to set the warning output condition, and may also be referred to as a "reference value."

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., identifying information related to a driver's attention state and a surrounding road environment) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., identifying information related to a driver's attention state and a surrounding road environment) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., identifying information related to a driver's attention state and a surrounding road environment) described herein.

Minimum risk maneuver (MRM) operation(s) may also be controlled, for example, based on one or more features (e.g., identifying information related to a driver's attention state and a surrounding road environment) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., identifying information related to a driver's attention state and a surrounding road environment) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

An autonomous driving level and/or autonomous driving activation/deactivation may also be controlled, for example, based on one or more features (e.g., identifying information related to a driver's attention state and a surrounding road environment) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as 5 seconds, 30 seconds, 1 minute, etc.). By changing the required user attentiveness, the driver may be required to look ahead more often (e.g., at least once in a threshold time period, such as 5 seconds, 30 seconds, 1 minute, etc.). By changing the autonomous driving level, one or more video contents may not be displayed on a display of the vehicle.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., identifying information related to a driver's attention state and a surrounding road environment) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, driver warning control, autonomous driving operational design domain (ODD), engaging and/or disengaging an autonomous driving mode, etc.). One or more auxiliary devices (e.g., engine brake, exhaust brake, hydraulic retarder, electric retarder, regenerative brake, etc.) may also be controlled, for example, based on one or more features (e.g., identifying information related to a driver's attention state and a surrounding road environment) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., evaluating the engagement state of the driver) described herein.

The vehicle that an autonomous driving system is actively controlling may be referred to as an ego vehicle, a host vehicle, or an autonomous vehicle. The ego vehicle may also be referred to as a self-driving car, an autonomous car (AC), a driverless car, a robotaxi, a robotic car, or a robo-car. The ego vehicle may be the vehicle that is equipped with the autonomous driving system. Alternatively, the autonomous driving system may control the ego vehicle, for example, from an external and/or remote device, such as a server. The ego vehicle can be partially or wholly controlled (e.g., piloted, driven, etc.) remotely by a remote human driver. A car that is ahead of the ego vehicle (e.g., in the same driving lane as the ego vehicle) may be referred to as a vehicle in front (e.g., a vehicle directly in front), a vehicle ahead (e.g., a vehicle directly ahead), a lead vehicle, a leading vehicle, or a preceding vehicle. A car that follows the ego vehicle (e.g., in the same driving lane as the ego vehicle) may be referred to as a car behind, a trailing vehicle, a following vehicle, or a succeeding vehicle. An adjacent vehicle may refer to any vehicle located in any direction (e.g., front, rear, left, right, diagonal, etc.) from the ego vehicle as long as no other vehicles (e.g., intervening vehicles) exist between it and the ego vehicle (e.g., regardless of the distance from the ego vehicle). Alternatively, in some contexts, only those vehicles that are located within a threshold distance (e.g., line of sight and/or detection limit of one or more sensors of the ego vehicle) from the ego vehicle may be referred to as adjacent vehicles. A target vehicle may be any vehicle that is near the ego vehicle (e.g., within a threshold distance away from the ego vehicle). The target vehicle may be any vehicle that the autonomous driving system monitors, recognizes, identifies, tracks, and/or analyzes, either actively or passively, either once or multiple times, and either sporadically or continuously. The threshold distance may be, for example, the line of sight and/or the detection limit of one or more sensors of the ego vehicle, but the threshold distance may be a value (e.g., an adjustable value) that is less than the line of sight and/or the detection limit of the one or more sensors of the ego vehicle. The target vehicle can be, for example, a vehicle in front, a vehicle behind, a vehicle in a different lane than the driving lane of the ego vehicle (e.g., a vehicle to the left, a vehicle to the right, a vehicle in a diagonal direction, etc.), and/or an adjacent vehicle (e.g., regardless of the distance from the ego vehicle and/or regardless of whether there are intervening vehicle(s) between the target vehicle and the ego vehicle). A target vehicle may also be referred to as a surrounding vehicle, a nearby vehicle, an external vehicle, another vehicle (other vehicles), and so forth.

The steps of the flowcharts mentioned in this document may be written as being performed by the processor 130 of the autonomous vehicle 10, but are not limited thereto, and the control device 100 or the autonomous vehicle 10 itself may perform the example embodiment(s) of each step.

Hereinafter, one or more example embodiments will be described in detail with reference to the accompanying drawings, but the same reference numerals are given to the same or corresponding constituent elements regardless of the drawing reference numerals, and redundant descriptions thereof will be omitted.

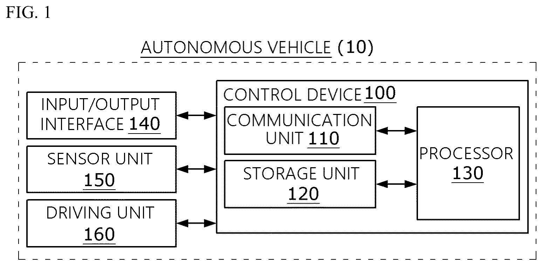

FIG. 1 is a schematic diagram of example components of an autonomous vehicle 10.

The autonomous vehicle 10 may include a control device 100, a communication unit 110, a storage unit 120, a processor 130, an input/output interface 140, a sensor unit 150, and a driving unit 160. Each of these components in FIG. 1 may be implemented inside the vehicle.

The autonomous vehicle 10 may be dynamically controlled in various driving situations through an autonomous driving system. For example, the autonomous driving system may provide both driving stability and convenience through longitudinal control (e.g., acceleration and deceleration) and lateral control (e.g., lane keeping and changing) of the autonomous vehicle 10. This autonomous driving system may monitor the driving environment through sensors and a control device, and process data in real time to adjust the vehicle's position, driving speed, direction, and the like.

The control device 100 may be formed integrally with the internal components of the vehicle, or may be implemented as a separate independent device from other components inside the autonomous vehicle 10 and communicate with the internal components of the vehicle through various connection means (e.g., CAN bus, wireless network, wired connection, etc.). The control device 100 includes a communication unit 110, a storage unit 120, and a processor 130 to manage the longitudinal and lateral control of the vehicle, and may additionally include other components such as an input/output interface 140, a sensor unit 150, and a driving unit 160 to perform complex control functions according to the driving situation.

The control device 100 may store data collected from the sensor unit 150 during driving in the storage unit 120 and process it in real time to control the safety and convenience functions of the vehicle. For example, the control device may perform overall control and management of the autonomous driving system, such as providing a notification in a situation where driver intervention is required based on data detected from the sensor unit 150.

The control device 100 may display the vehicle control state or receive driver input to control the driving function through a user interface linked with a human-machine interface (HMI) based on various driver settings and driving conditions.

The control device 100 may analyze the driver's attention state and the road environment around the vehicle in real time. The control device 100 may collect data such as the driver's gaze direction, eye blink pattern, head direction change, and whether a mobile phone is being operated, and may assess the risk level by combining it with the road environment (e.g., weather conditions, road type, traffic flow).

The communication unit 110 may communicate with other control devices inside the vehicle to share data between systems, or may transmit and receive various information through a connection with the outside of the vehicle. The communication unit 110 uses various in-vehicle communication methods such as CAN communication and Ethernet to transmit control signals and data between internal components, and may link driving information and external data in real time through communication with a user terminal, other vehicles (V2V: Vehicle-to-Vehicle), infrastructure (V2I: Vehicle-to-Infrastructure), or an external server.

The communication unit 110 may perform Short-range communication, Global Navigation Satellite System (GNSS) module (e.g., GPS module), V2X (Vehicle-to-Everything) communication, optical communication, broadcast transmission and reception, and Intelligent Transport Systems (ITS) communication functions. For example, the communication unit 110 may support stable data transmission at a short distance using various wireless communication technologies such as Bluetooth, Radio Frequency Identification (RFID), Infrared Data Association (IrDA), Ultra Wideband (UWB), ZigBee, Near-Field Communication (NFC), Wi-Fi, Wi-Fi Direct, and Wireless USB. In addition, it may perform long-distance communication through a mobile communication module based on a mobile communication network such as LTE and 5G and a wireless internet module to receive real-time data or link with the cloud, thereby improving the performance of the autonomous driving system.

The communication unit 110 may receive external data (e.g., weather information, traffic flow data, etc.) from an external server.

The storage unit 120 may include various types of memory capable of storing data, and may be integrated into the control device 100 or the processor 130 or configured as a separate module. The storage unit 120 may include non-volatile memory (e.g., hard disk drive, flash memory, etc.) and volatile memory, and may combine them to implement a memory system with various capacities and performances.

The storage unit 120 may include a memory capable of storing and managing various data related to the autonomous driving system.

The storage unit 120 may store driving data representing the driver's driving habits and build a customized warning database for individual drivers based on this.

The processor 130 communicates with various internal components of the communication unit 110, the storage unit 120, the input/output interface 140, the sensor unit 150, the driving unit 160, and the autonomous vehicle 10 through electrical or operational connections, and controls the operation of each component and performs data processing. The processor 130 is a central processing unit for executing instructions and calculating data, and may collect, process, and analyze data in real time according to the driving environment of the vehicle to perform vehicle control.

The processor 130 may be implemented in the form of hardware, software, or a combination thereof, and may perform vehicle control logic in the form of, for example, a microcontroller, a field-programmable gate array (FPGA), or an application-specific integrated circuit (ASIC). In addition, it may include a multi-processor configuration for the control of complex autonomous driving and driver assistance systems. This processor configuration may support the overall control and stable performance of the vehicle through the execution of the autonomous driving and assistance systems, sensor data processing, communication data management, and driving-related judgment functions.

The processor 130 may calculate a risk score by comprehensively analyzing the driver's attention state and the road environment, and dynamically adjust the warning system accordingly.

The input/output interface 140 receives input related to vehicle control from the user and plays a role in delivering the vehicle's control state and system operation information to the user.

The input/output interface 140 may perform the function of receiving various inputs from the user and delivering the vehicle control state to the user. For example, the input/output interface 140 may include at least one of input through a physical button provided inside the autonomous vehicle 10, input through a soft button displayed on the display of the autonomous vehicle 10, user's voice input, and user's gesture input.

The input means may include a physical button, a soft key on a touch display, a voice recognition function, a gesture recognition function, and the like, through which the user may input commands such as an autonomous driving system activation request, a function change, or a driving assistance setting.

In addition, the input means may receive user input through an input device provided on the steering wheel of the autonomous vehicle 10. For example, through a button mounted on the steering wheel, the driver may input a command to activate or deactivate the autonomous driving system even while driving. This steering wheel-based input may support the user to quickly control the autonomous driving function by providing an intuitive interface.

The output means includes a display, an audio module (e.g., a speaker), a haptic module, and the like, and may provide the user with the status of the autonomous driving system, a control change request notification, whether a function is activated, etc. in a visual, auditory, and tactile form.

In addition, the status of the autonomous driving system can be intuitively checked through a head-up display (HUD), a cluster, Audio Video Navigation (AVN), and a display built into a rear mirror or a side mirror. In addition, the status of the autonomous driving system can be checked through the display of the console installed in each row of the autonomous vehicle 10, the application of the user terminal, and the like.

The input/output interface 140 may perform the function of receiving the driver's input and outputting the control state of the vehicle and system operation information to the user. The input/output interface 140 may provide various types of warnings using visual, auditory, and tactile senses. The input/output interface (also referred to as input and output interface) 140 may output information about the control state of the warning output (e.g., whether the warning output is currently activated, whether the output intensity or period is adjusted, whether the output method is changed, etc.).

The sensor unit 150 may include a number of sensors that support the stable operation of the autonomous driving system by detecting various driving and environmental information in real time. The sensor unit 150 may measure the distance and speed to surrounding objects through long-range detection sensors such as a radar and a lidar, and may include an ultrasonic sensor to detect objects near the autonomous vehicle 10.

In addition, the sensor unit 150 may include a position sensor such as GPS to collect the position information of the autonomous vehicle 10, and may include an optical sensor to provide surrounding illuminance information so that the system can respond to changes in light. In addition, the sensor unit 150 may include an acceleration pedal and a deceleration pedal sensor, a steering wheel detection sensor, a seating sensor, etc. to monitor the driving control state of the autonomous vehicle 10 and the user's operation.

The sensor unit 150 may include a camera. The camera may be classified into an external camera and an internal camera. The external camera recognizes the road and the surrounding environment, and the internal camera may comprehensively grasp the situation inside and outside the vehicle by detecting the driver's state (e.g., gaze tracking, drowsiness detection) or the indoor situation.

The sensor unit 150 may include a heart rate sensor, a pressure sensor, an infrared sensor, etc. to collect the driver's biometric information or various environmental data.

The sensor unit 150 may include a sensor capable of detecting the driver's biometric information. For example, the sensor unit 150 may determine the driver's fatigue state through a heart rate sensor or an infrared camera.

The driving unit 160 provides the driving force necessary for the driving of the autonomous vehicle 10, and may include various components that control the operation of the vehicle according to the command output from the control device 100. The driving unit 160 may be composed of devices that generate and transmit the power of the vehicle, such as an engine, a motor, a transmission, and a wheel drive system, and a controller that controls them, and through these components, acceleration, deceleration, and direction change of the autonomous vehicle 10 may be performed.

The driving unit 160 may be controlled to maintain driving safety by performing longitudinal control (e.g., acceleration and deceleration) and lateral control (e.g., lane keeping and changing) of the vehicle. For example, it receives a command from the control device 100 to adjust the output of the motor or adjust the rotation speed and direction of the wheels so that the vehicle can follow the driving path.

In addition, the driving unit 160 may include a brake system to reduce or stop the vehicle speed during driving. The driving unit 160 may control the autonomous vehicle 10 based on the control through an electric motor in the case of an electric vehicle, and based on the engine output in the case of an internal combustion engine vehicle.

The driving unit 160 may perform a function of adjusting the speed of the vehicle or automatically stopping under certain conditions when the driver's concentration is sharply reduced.

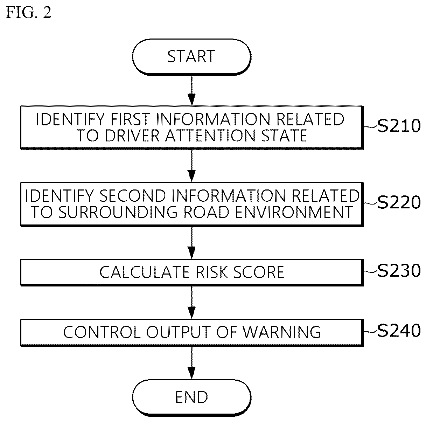

FIG. 2 is a flow chart of an example method of inducing driver attention.

The processor 130 may identify first information related to a driver's attention state (S210).

Specifically, the processor 130 may identify the first information including at least one of a gaze direction of the driver, an eye blink, a head direction change, or a response speed (e.g., response time) to an in-vehicle warning signal.

For example, the processor 130 may analyze a gaze vector of the driver through the sensor unit 150 such as an internal camera to determine that the attention is distributed when the driver does not look forward for a certain period of time. In addition, an increase in the frequency of blinking or an increase in the time to close the eyes may be assessed as a drowsy state. In addition, the processor 130 may monitor a head direction (e.g., orientation) change to recognize a distraction state when the driver continuously looks away from the front.

The processor 130 may detect an operation of a mobile phone by the driver based on whether a screen of a user terminal such as a smartphone is activated. When the vehicle and the smartphone are connected via Bluetooth or the like, the processor 130 may analyze whether a specific app is used to assess the possibility of using the mobile phone while driving. In addition, the processor 130 may detect a pattern in which a hand of the driver repeatedly moves by utilizing an in-vehicle motion sensor or an accelerometer to determine whether the mobile phone is operated.

The processor 130 may analyze a response speed (e.g., response time) of the driver to an in-vehicle warning signal (e.g., a warning sound, a HUD notification, haptic feedback, or the like). For example, the processor 130 may determine that the reaction speed is slow when the driver does not step on a brake or operate a handle within a predetermined time after a warning output. When the reaction rate is continuously delayed, it may be assessed that a fatigue level of the driver is high or cognitive ability is reduced.

The processor 130 may identify second information related to a surrounding road environment (S220).

Specifically, the processor 130 may receive data from the sensor unit 150 disposed outside the vehicle to analyze information such as a type of road, movement of a surrounding vehicle, presence or absence of a pedestrian, weather conditions, and the like. This information may correspond to the second information. Further, the second information may be received from an external server.

Specifically, the second information may include at least one of road type information on which a vehicle is driving, traffic information around the vehicle, and weather information of an area on which the vehicle is driving.

For example, the processor 130 may analyze the speed of surrounding vehicles when the vehicle is driving on a highway to assess a relative speed difference of the autonomous vehicle 10. In addition, since there is a high possibility of the appearance of a pedestrian or a personal mobility (PM) on a general road, the processor 130 may notify the driver of the content when detecting an object of the pedestrian or the personal mobility.

The processor 130 may collect weather information via an embedded weather sensor or an external network of the vehicle. Weather information of a visual field limiting element such as rain, snow, fog, or the like may also be collected.

On the other hand, the processor 130 may collect biometric information of the driver and analyze it to assess an attention state.

Specifically, the processor 130 may identify third information including biometric data such as a heart rate (HR), a heart rate variability (HRV), a skin electrical response (GSR), and a breathing pattern of the driver.

For example, the processor 130 may analyze the heart rate to detect a drowsy state. Generally, when fatigue accumulates, heart rate tends to decrease and heart rate variability tends to decrease. Such data may be measured via an in-vehicle radar sensor, a wearable device (e.g., smartwatch, smart band), a biometric sensor embedded in a steering wheel, or the like.

In addition, the processor 130 may analyze the breathing pattern to assess whether the driver is nervous or drowsy. For example, deep and constant breathing may indicate a stable state, while shallow and irregular breathing may indicate a state of drowsiness or stress. In addition, the skin electrical response (GSR) may be utilized as an index reflecting the degree of emotional excitement or attention concentration.

The processor 130 may be associated with various sensors in the vehicle to sense breathing patterns. For example, the processor 130 may detect the movement of the chest or abdomen of the driver with an infrared camera, a radar-based biometric sensor, or the like to measure the breathing frequency. In addition, the processor 130 may measure the heart rate (HR) and heart rate variability (HRV) of the driver by utilizing a steering wheel including an electrocardiogram (ECG) sensor.

The processor 130 may calculate a risk score (e.g., a reference value) by comprehensively analyzing the attention state of the driver and the road environment (S230).

Specifically, the processor 130 may comprehensively analyze the first information (e.g., the attention state of the driver), the second information (e.g., the road environment, the weather information, and the like), and the third information (e.g., the biometric information of the driver) to assess the risk level.

When the driver does not keep an eye on the front for a long time, or when the blinking frequency increases, the risk level may increase. At the same time, when the road environment is complicated, the traffic congestion is high, or the weather conditions are poor, the risk level may be additionally weighted and assessed.

For example, the risk score may be determined using the following equation: 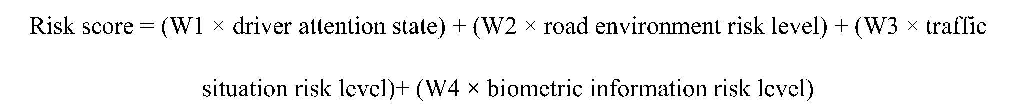 Risk score = (W1 × driver attention state) + (W2 × road environment risk level) + (W3 × traffic situation risk level)+ (W4 × biometric information risk level)Here, W1, W2, W3, W4 are weights for each element, and may be dynamically adjusted in certain situations.

The processor 130 may select each of the weights W1 to W4 from a database DB stored in advance, or may calculate a value suitable for a specific situation through an artificial intelligence (AI) and a deep learning-based model. In the database, the states of the driver's attention state, the road environment risk level, the traffic situation risk level, and the biometric information risk level may be mapped with respective numerical values and stored in advance by a predetermined number. In addition, this database may be further updated.

In addition, the processor 130 learns driving history data (e.g., historical attention state data) of the driver, and when a stable driving pattern is maintained even when a specific driver frequently moves the gaze, the weight for the driver attention state W1 may be lowered, and the weight for the road environment risk level W2 or the biometric information risk level W4 may be relatively increased. On the other hand, in the case of a new driver, all weights may be set as default values, or a standard model may be applied.

The road environment risk level W2 may include weather information and the like, and may be analyzed in real time via an external sensor (e.g., a temperature sensor, a humidity sensor, a rainwater detection sensor, or the like) of the vehicle and a network module that receives external weather data. For example, in an environment where the amount of snowfall is large or the possibility of road freezing is high, the risk level may be automatically raised.

In addition, the processor 130 may consider real-time driving data of the vehicle when calculating the risk score. For example, when a driving pattern such as rapid acceleration, rapid braking, or lane departure is detected, the corresponding data may be reflected in a risk score calculation model to perform a more precise risk assessment.

The processor 130 may determine the risk score by applying different weights to at least some of the information included in the first information or the second information based on a change in a driving habit of the driver or a road environment. That is, the processor 130 may determine a reference value by selectively reflecting at least some of the information included in the first information or the second information, based on a change in the driving habit of the driver or the road environment.

For example, when the driver maintains a safe driving habit even when the driver frequently moves the gaze, the processor 130 may relatively lower the weight of the driver's attention state W1 and adjust the weight of the biometric information W4 or the road environment risk level W2 to perform a more precise assessment. On the other hand, when the driver repeatedly performs rapid acceleration or rapid braking, the driving habit is assessed as dangerous, and the weight for W1 or W3 (e.g., traffic situation risk) may be increased.

The processor 130 may change (e.g., adjust) the risk score in real time.

In detail, the processor 130 may dynamically adjust the risk score in consideration of a real-time state change of the driver (e.g., drowsiness detection, stress increase), a sudden change in the road environment (e.g., sudden vehicle congestion, weather change), in-vehicle sensor data (e.g., steering wheel operation frequency, sudden braking detection), and the like.

For example, when the driver shows a slight sign of drowsiness, the intensity of the warning may be lowered, but when the drowsiness intensifies, the risk score may be immediately raised to output a strong warning. In addition, although the warning frequency is reduced when the traffic flow is smooth, the risk score may be changed (e.g., adjusted) in real time to increase the intensity of the warning when a sudden congestion occurs.

The processor 130 may set a weight based on past driving data and driver profile stored in the database DB, and may apply a weight reflecting the real-time driving data by utilizing a learning algorithm based on AI and deep learning.

In this way, the processor 130 may dynamically calculate the risk score in consideration of various factors including the driver's attention state (e.g., first information), the road environment (e.g., second information, weather information, etc.), the biometric information (e.g., third information), and the real-time driving data, and the setting of the weight may be performed through a database (DB)-based selection method or an artificial intelligence (AI)- and deep learning-based learning method.

The processor 130 may control an output of a warning based on the calculated risk score (S240).

Specifically, when the risk score exceeds a preset threshold, the processor 130 may output one or more of visual, auditory, and tactile warnings to the driver. The visual warning may provide a danger message via a HUD or display. The auditory warning may inform a dangerous situation through a warning sound or voice guidance. The tactile warning may draw the attention of the driver via the steering wheel vibration or seat belt tightening function.

For example, the processor 130 may blink an ambient light or display a warning message via a HUD or other display when the driver's negligence in forward gaze is detected. When more serious negligence persists, a strong warning sound may be output or sheet vibration may be activated.

The processor 130 may continuously monitor the response of the driver and select the most effective warning method. For example, when a particular driver responds quickly to an auditory warning, then the frequency of the auditory warning may be increased in a similar situation. Conversely, when a particular driver is more sensitive to a tactile warning, it may preferentially provide a seat vibration warning.

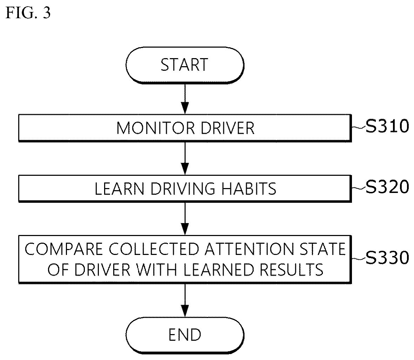

FIG. 3 is a flowchart of an example method of learning an attention state of a driver and deriving scoring. Contents of FIG. 3 that overlap with the content of FIG. 2 may be briefly described or omitted.

The processor 130 may collect data from the driver monitoring system to assess the attention state of the driver in real time (S310).

The processor 130 may continuously monitor the attention state of the driver by using an internal camera, an infrared (IR) camera, a steering wheel sensor, a radar-based biometric sensor, or the like included in the sensor unit 150.

The processor 130 may distinguish the driver's body parts and monitor them individually.

For example, to detect the head and face of the driver, the processor 130 may utilize an internal camera or an IR camera to analyze a gaze direction, an eye blink frequency, a face tilt, and the like. If the driver does not keep an eye on the front or the time for closing the eyes becomes longer, the attention may be dispersed or the driver may be determined to be in a drowsy state.

In addition, the processor 130 may utilize a steering wheel sensor to monitor movement of the hand and arm of the driver. For example, when the driver does not hold the steering wheel for a long time or does not operate it for a specific time, it may be determined that the concentration is reduced.

In addition, the processor 130 may utilize a radar-based biometric sensor to sense an upper body movement of the driver. For example, when the upper body of the driver is continuously tilted or does not face forward, it may be determined that the fatigue level of the driver is increased or attention is dispersed.

As such, the processor 130 may individually analyze the body parts of the driver to perform a more precise attention state assessment.

The processor 130 may learn the driver's driving habits to construct a personalized attention state assessment model (S320).

Specifically, the processor 130 may collect long-term driving data of the driver to analyze driving habits and attention patterns.

For example, some drivers may frequently move their gaze on a regular basis, but may maintain safe driving. On the other hand, some drivers may experience a decrease in driving stability even with a short gaze movement. The processor 130 may learn the characteristics of these individual drivers to improve the accuracy of the attention state assessment.

The processor 130 may utilize a database DB or apply a deep learning-based model to learn a driving habit of a driver.

For example, when the driver frequently performs rapid acceleration and rapid braking, the processor 130 may learn this in an unstable driving pattern and reflect it when calculating a risk score. On the other hand, when the driver maintains smooth acceleration and deceleration at a constant speed, the risk assessment model may be adjusted by learning with a stable driving habit.

In addition, the processor 130 may learn a corresponding pattern of the driver according to the road environment. For example, in a case where the driver maintains attention on a highway, but there is a large amount of gaze movement on a general road, it is possible to perform a customized risk assessment according to the road environment.

The processor 130 may compare the collected attention state (e.g., historical attention state data) of the driver with the learned driving habit data to derive scoring (S330).

In detail, the processor 130 may analyze, based on the long-term driving habit data of the driver, whether the sensed attention state is within a normal range in real time.

Here, the real-time attention state may include data such as a gaze direction of the driver, an eye blink frequency, a head movement, a reaction speed, and the like, and the learned driving habit data may provide a criterion of a normal attention state based on a past driving pattern.

The processor 130 may compare the attention state data of the driver collected (e.g., accumulated) in real time (e.g., historical attention state data) with the learned model to assess whether the corresponding driver maintains a normal attention level. For example, when the driver has a driving habit of moving the gaze frequently in general, the risk level is not highly assessed only by simple movement of the gaze, and the distraction state may be determined only when the risk level exceeds a specific criterion.

As described above, the processor 130 may calculate the risk score by comprehensively analyzing the first information (e.g., the attention state of the driver), the second information (e.g., the road environment, the weather condition, and the like), and the third information (e.g., the biometric information of the driver).

The processor 130 may additionally apply a machine learning or deep learning model to the driver's driving habits and real-time data when calculating the risk score.

For example, the processor 130 may assess the attention state of the driver in real time based on the learned driving habit data of the driver, select a weight in an existing database DB, or dynamically adjust the weight via a machine learning-based model.

In detail, the processor 130 may analyze, based on the long-term driving habit data of the driver, whether the sensed attention state is within a normal range in real time.

The processor 130 may analyze the attention state data of the driver (e.g., in real time) by utilizing a machine learning or deep learning-based model, and assess whether the real-time data belongs to a normal driving pattern through the learned model.

For example, when the driver generally has a driving habit of moving the gaze frequently, the learned model may adjust to reduce the impact of the gaze movement so as not to increase unnecessary risk. On the other hand, when the driver tends to slow down the reaction rate due to recent fatigue conditions, the learned model may increase the importance of the reaction rate to perform a more sensitive assessment.

As such, the attention state scoring result of the driver performed in FIG. 3 may be associated with the risk score calculation process disclosed in FIG. 2, thereby enabling dynamic risk assessment in real time.

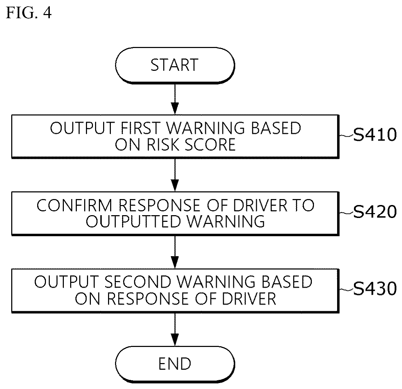

FIG. 4 is a flowchart of an example method of outputting a warning based on a risk score and adjusting the warning according to a driver's response.

The processor 130 may output a first warning based on the risk score calculated through FIG. 2 to FIG. 3 described above.

Specifically, the processor 130 may output the first warning in at least one of a visual warning, an auditory warning, and a tactile warning according to a risk score calculated based on the attention state of the driver and the road environment (S410).

More specifically, the processor 130 may analyze a risk score derived based on the driver's attention state (e.g., first information), the road environment (e.g., second information, weather information, and the like), and the biometric information (e.g., third information), and adjust at least one of a type, a period, a pattern, and an intensity of a warning output corresponding to the risk score.

The processor 130 may control the warning output in a stepwise manner depending on the risk score.

Specifically, the processor 130 may first provide a visual warning if the risk score is low, and additionally output an audible warning and a tactile warning as (e.g., if) the risk score increases.

For example, when the driver simply deviates from the gaze for a certain period of time, the processor 130 may output a visual attention message via the display. However, when the driver does not keep an eye on the front for a long time or a drowsy state is detected, an auditory warning that outputs a warning sound may be added, and when the risk score is further increased, a tactile warning such as a seat vibration or a steering wheel vibration may be activated.

In addition, when the risk score rapidly increases (e.g., when a pedestrian suddenly appears in front of the vehicle), it is possible to output a strong warning sound and provide a high-intensity warning such as tightening a seat belt.

The processor 130 may be configured to increase the frequency and intensity of the warning output as the risk score increases.

Specifically, the processor 130 may analyze the calculated risk score in real time, select and output at least one of a visual warning, an auditory warning, and a tactile warning according to the corresponding risk level, and gradually adjust the frequency and intensity of the warning as the risk score increases.

The processor 130 may confirm a response of the driver to the outputted warning (S420).

In detail, the processor 130 may analyze whether the driver performs an appropriate correspondence within a certain time after the warning output.

For example, when the driver immediately presses the brake after outputting a warning or operates the steering wheel to maintain a lane, the processor 130 may assess that the warning has effectively worked. On the other hand, when the driver does not respond at all, or when attention continues to be dispersed after the warning, a stronger warning may be additionally provided.

The processor 130 may learn a warning response pattern of the driver.

For example, if a particular driver is sensitive to (e.g., a response time of the driver is less than a threshold time amount) one type of warning (e.g., an auditory warning), but slow (e.g., a response time of the driver is greater than a threshold time amount) to another type of warning (e.g., a visual warning), the processor 130 may then increase the frequency of the type of warning that the driver has historically more readily responded to (e.g., the auditory warning) and adjust the intensity of the type of warning that the driver has historically less readily responded to (e.g., the visual warning) in the warning system.

Further, the processor 130 may be configured to adjust a type, a period, a pattern, or an intensity of the warning output if the driver becomes familiar with the same warning pattern and the warning effect decreases. For example, if the driver's response to a certain type, period pattern, or intensity of a warning output wanes over time (e.g., it takes longer than a threshold time amount for the driver to respond to the warning output), then one or more of the type, period, pattern, and/or intensity may be adjusted. For example, a different type (e.g., visual instead of auditory, or vice versa), a different period (e.g., longer or shorter alert, more frequent or less frequent alerts, etc.), a different pattern (e.g., visual alert after auditory alert, or vice versa), and/or a different intensity (e.g., louder or softer alert, etc.), etc. may be used.

The processor 130 may output a second warning of a different type or a different combination of types from the first warning based on the response of the driver (S430).

Specifically, the processor 130 may adjust the intensity, type, and frequency of the warning depending on whether the driver responds to the first warning. For example, when the driver does not respond to a first visual warning, an auditory warning and a tactile warning may be additionally provided in the second step.

In addition, the processor 130 may dynamically change (e.g., adjust) the combination between warning types to adjust the driver to react most effectively. For example, when the driver does not respond to a visual warning but responds immediately to a tactile warning (e.g., a seat vibration), then the frequency of the tactile warning may be increased and the frequency of the visual warning may be decreased in a similar dangerous situation.

In addition, the processor 130 may provide a customized warning message recommending rest instead of repeated warning when the fatigue state of the driver is continuously sensed.

As such, the processor 130 may learn the driver's response in real time and dynamically adjust the warning output to maximize the effectiveness of the warning system.

An autonomous vehicle control device may comprise: a memory; and one or more processors connected to the memory, wherein the one or more processors may be configured to: identify first information related to a driver's attention state, identify second information related to a surrounding road environment of the vehicle, determine a reference value for setting a warning output condition based on the first information and the second information, and control a warning output of the autonomous vehicle based on the determined reference value.

The first information may comprise at least one of a gaze direction of the driver, an eye blink, a head direction change, or a response speed to an in-vehicle warning signal.

The first information may comprise a result learned based on the accumulated attention state data of the driver, and the one or more processors may be configured to compare the learned result with the attention state of the driver collected in real time to calculate the reference value.

The one or more processors may be configured to: identify third information related to biometric information of the driver; and determine the reference value further based on the third information.

The one or more processors may be configured to determine the reference value by selectively reflecting at least some of the information included in the first information or the second information, based on a change in a driving habit of the driver or the road environment.

The one or more processors may be configured to change the reference value in real time.

The one or more processors may be configured to: output a first warning via at least one of a visual warning, an auditory warning, and a tactile warning; confirm a response of the driver to the outputted warning; and output a second warning of a different kind or a different combination from the first warning based on the driver response.

The second information may comprise at least one of roadway type information on which the vehicle is driving; traffic information around the vehicle; or weather information of an area in which the vehicle is driving.

The one or more processors may be configured to adjust at least one of a type, a period, a pattern, or an intensity of the warning output based on the reference value.

The one or more processors may be configured to output information about a control state of the warning output via an input/output interface of the autonomous vehicle.

A method for controlling an autonomous vehicle may comprise: identifying first information related to a driver's attention state; identifying second information related to a surrounding road environment of the vehicle; determining a reference value for setting a warning output condition based on the first information and the second information; and controlling a warning output of the autonomous vehicle based on the determined reference value.

The first information related to the driver's attention state may comprise at least one of a gaze direction of the driver, an eye blink, a head direction change, or a response speed to an in-vehicle warning signal.

The first information related to the driver's attention state may comprise a result learned based on the accumulated attention state data of the driver, and the reference value may be calculated by comparing the learned result with the first information related to the driver's attention state.

A method according to one or more embodiments of the present disclosure may comprise: identifying third information related to biometric information of the driver; and determining the reference value based on the third information related to the biometric information of the driver.

The reference value may be determined by selectively reflecting at least some of the information included in the first information related to the attention state of the driver or the second information related to the surrounding road environment of the vehicle, based on a change in a driving habit of the driver or the road environment.

The reference value may be changed in real time.

The method may further comprise: outputting a first warning via at least one of a visual warning, an auditory warning, and a tactile warning; confirming a response of the driver to the outputted warning; and outputting a second warning of a different kind or a different combination from the first warning based on the driver response.

The second information related to the surrounding road environment of the vehicle may comprise at least one of roadway type information on which the vehicle is driving, traffic information around the vehicle, or weather information of an area in which the vehicle is driving.

At least one of a type, a period, a pattern, or an intensity of the warning output may be adjusted based on the reference value.

Information about a control state of the warning output may be output via an input/output interface of the autonomous vehicle.

A warning output is controlled by comprehensively analyzing the attention state of the driver and the road environment, so that the concentration of the driver may be induced more efficiently.

The effects of the present disclosure are not limited to the effects mentioned above, and other effects not mentioned will be clearly understood by a person skilled in the art from the following description.

The term 'unit' as used in one or more embodiments may refer to a software or hardware component, such as an FPGA or an ASIC, and the 'unit' performs certain roles. However, the 'unit' is not limited in meaning to software or hardware. A 'unit' may be configured to reside in an addressable storage medium or configured to be executed by one or more processors. Therefore, as an example, a 'unit' includes components such as software components, object-oriented software components, class components, and task components, as well as processes, functions, properties, procedures, subroutines, segments of program code, drivers, firmware, microcode, circuits, data, databases, data structures, tables, arrays, and variables. The functionality provided within the components and 'units' may be combined into a smaller number of components and 'units' or further separated into additional components and 'units'. Furthermore, the components and 'units' may be implemented to execute one or more CPUs within a device or a secure multimedia card.

While the present disclosure has been described above with reference to one or more example embodiments, those skilled in the art will understand that various modifications and changes can be made to the present disclosure without departing from the spirit and scope of the disclosure as set forth in the claims below.

## Claims

1. An autonomous vehicle control device comprising:
a processor; and
a memory storing at least one instruction that is configured, when executed by the processor, to cause the autonomous vehicle control device to:
identify first information related to an attention state of a driver associated with an autonomous vehicle;
identify second information related to a surrounding road environment of the autonomous vehicle;
during autonomous driving control of the autonomous vehicle, determine, based on the first information and the second information, a reference value for setting a warning output condition; and
control, based on the determined reference value, a warning output of the autonomous vehicle.

2. The autonomous vehicle control device of claim 1, wherein the first information comprises:
at least one of a gaze direction of the driver, an eye blink of the driver, a head direction change of the driver, or a response time of the driver to an in-vehicle warning signal, and/or
a result learned based on historical attention state data of the driver, and
wherein the at least one instruction is configured, when executed by the processor, to cause the autonomous vehicle control device to determine the reference value by:
determining, based on comparing the learned result with the first information, the reference value.

3. The autonomous vehicle control device of claim 1 or 2, wherein the at least one instruction is configured, when executed by the processor, to cause the autonomous vehicle control device to determine the reference value by:
identifying third information related to biometric information of the driver; and
determining the reference value further based on the third information.

4. The autonomous vehicle control device of any one of claims 1 to 3, wherein the at least one instruction is configured, when executed by the processor, to cause the autonomous vehicle control device to determine the reference value by:
determining the reference value based on at least some information that is selected, from the first information and the second information, based on a change in a driving habit of the driver or the surrounding road environment.

5. The autonomous vehicle control device of any one of claims 1 to 4, wherein the at least one instruction is configured, when executed by the processor, to further cause the autonomous vehicle control device to adjust the reference value in real time.

6. The autonomous vehicle control device of any one of claims 1 to 5, wherein the at least one instruction is configured, when executed by the processor, to cause the autonomous vehicle control device to control the warning output of the autonomous vehicle by:
outputting a first warning comprising at least one of: a visual warning, an auditory warning, or a tactile warning;
receiving a response of the driver to the first warning; and
outputting, based on the response of the driver, a second warning of a different type or a different combination of types from the first warning.

7. The autonomous vehicle control device of any one of claims 1 to 6, wherein the surrounding road environment comprises at least one of:
a type of a roadway on which the autonomous vehicle is driving;
traffic around the autonomous vehicle; or
a weather condition of an area in which the autonomous vehicle is driving.

8. The autonomous vehicle control device of any one of claims 1 to 7, wherein the at least one instruction is configured, when executed by the processor, to cause the autonomous vehicle control device to control the warning output of the autonomous vehicle by:
adjusting, based on the reference value, at least one of a type, a period, a pattern, or an intensity of the warning output of the autonomous vehicle, and/or
outputting, via an input and output interface of the autonomous vehicle, information related to a control state of the warning output.

9. A method performed by an apparatus of an autonomous vehicle, the method comprising:
identifying first information related to an attention state of a driver associated with the autonomous vehicle;
identifying second information related to a surrounding road environment of the autonomous vehicle;
during autonomous driving control of the autonomous vehicle, determining, based on the first information and the second information, a reference value for setting a warning output condition; and
controlling, based on the determined reference value, a warning output of the autonomous vehicle.

10. The method of claim 9, wherein the first information comprises:
at least one of a gaze direction of the driver, an eye blink of the driver, a head direction change of the driver, or a response time of the driver to an in-vehicle warning signal, and/or
a result learned based on historical attention state data of the driver, wherein the determining of the reference value comprises:
determining, based on comparing the learned result with the first information, the reference value.

11. The method of claim 9 or 10 , wherein the determining of the reference value comprises:
identifying third information related to biometric information of the driver; and
determining the reference value based on the third information, and/or
determining the reference value based on at least some information that is selected, from the first information and the second information, based on a change in a driving habit of the driver or the surrounding road environment.

12. The method of any one of claims 9 to 11, wherein the controlling of the warning output of the autonomous vehicle comprises:
outputting a first warning comprising at least one of: a visual warning, an auditory warning, or a tactile warning;
receiving a response of the driver to the first warning; and
outputting, based on the response of the driver, a second warning of a different type or a different combination of types from the first warning.

13. The method of any one of claims 9 to 12, wherein the surrounding road environment comprises at least one of:
a type of a roadway on which the autonomous vehicle is driving;
traffic around the autonomous vehicle; or
a weather condition of an area in which the autonomous vehicle is driving.

14. The method of any one of claims 9 to 13, wherein the controlling of the warning output of the autonomous vehicle comprises:
adjusting, based on the reference value, at least one of a type, a period, a pattern, or an intensity of the warning output of the autonomous vehicle, and/or
outputting, via an input and output interface of the autonomous vehicle, information related to a control state of the warning output.

15. An autonomous vehicle comprising:
a sensor configured to detect an attention state of a driver of the autonomous vehicle;
a processor; and
a memory storing at least one instruction that is configured, when executed by the processor, to cause the autonomous vehicle to:
identify, via the sensor at a first time, a first attention state of the driver;
during autonomous driving control of the autonomous vehicle, output, based on the first attention state, a first warning signal via a user interface of the autonomous vehicle, wherein the first warning signal is of a first warning signal type;
determine a response time, to the first warning signal, of the driver;
identify, via the sensor at a second time later than the first time, a second attention state of the driver; and
during autonomous driving control of the autonomous vehicle, output, based on the second attention state and based on the response time being greater than a threshold time amount, a second warning signal via the user interface of the autonomous vehicle, wherein the second warning signal is of a second warning signal type different from the first warning signal type.
